# FASCICULE DE BREVET EUROPEEN

(11) **EP 2 594 481 B1**
(45) Date de publication et mention de la délivrance du brevet: **19.03.2014**
(21) Numéro de dépôt: 12007169.1
(22) Date de dépôt: 16.10.2012
(51) Int. Cl.: B64C 27/00, F16F 7/10

(54) **Moyen de suspension antivibratoire d'une barre de maintien d'une boîte de transmission de puissance d'aéronef, dispositif de suspension antivibratoire, et aéronef**
Schwingungsdämpfendes Aufhängungsmittel für eine Haltestange eines Leistungsgetriebes eines Luftfahrzeugs, schwingungsdämpfende Aufhängevorrichtung und Luftfahrzeug
Anti-vibration suspension means of a restraint bar of an aircraft power transmission gearbox, anti-vibration suspension device and aircraft

(30) Priorité: 15.11.2011 FR 1103468
(43) Date de publication de la demande: 22.05.2013
(73) Titulaire: Airbus Helicopters, 13725 Marignane Cedex (FR)
(72) Inventeur: Pula, Mathieu, F-13090 Aix En Provence (FR); Galat-Camerini, Thibault, F-13250 Cornillon-Confoux (FR)
(74) Mandataire: GPI & Associés

(56) Documents cités:
- WO-A2-03/100284
- FR-A1- 2 363 737

## Description

La présente invention concerne un moyen de suspension antivibratoire d'une barre de maintien d'une boîte de transmission principale de puissance, un dispositif de suspension antivibratoire muni de ce moyen de suspension, et un aéronef muni d'un tel dispositif.

L'invention se situe donc dans le domaine technique restreint des dispositifs pour réduire des vibrations d'aéronefs.

Parmi les aéronefs, on distingue notamment les giravions munis d'au moins un rotor de sustentation lié à une structure porteuse, cette structure porteuse étant dénommée usuellement « cellule » ou encore « fuselage ».

Un tel aéronef comprend de plus une installation motrice mettant en mouvement une boîte de transmission de puissance solidarisée à la structure porteuse de l'aéronef. La boîte de transmission de puissance inclut alors un mât entraînant en rotation le rotor de sustentation.

On note que la boîte de transmission de puissance est souvent reliée à la structure porteuse par une paroi de fond et des moyens de fixation annexes comprenant généralement trois ou quatre barres de maintien obliques. La structure de montage du rotor de sustentation comprenant la boîte de transmission de puissance et les barres de maintien est parfois dénommée « pylône » par l'homme du métier en raison de sa géométrie.

Le rotor de sustentation et/ou la boîte de transmission de puissance peuvent être à l'origine de vibrations susceptibles de détériorer le confort des occupants de l'aéronef en engendrant des mouvements vibratoires et du bruit dans cet aéronef. De plus, des équipements de l'aéronef agencés dans la structure porteuse risquent d'être dégradés par les vibrations générées par l'ensemble mécanique comprenant la boîte de transmission de puissance et le rotor de sustentation.

Dès lors, on connaît différents dispositifs de suspension de boîte de transmission de puissance pour au moins réduire les vibrations au sein de l'aéronef, et notamment au sein d'une cabine pour le confort des pilotes et des passagers.

Un tel dispositif de suspension doit pouvoir, d'une part, transmettre les charges statiques induites par l'ensemble mécanique, et, d'autre part, filtrer les vibrations induites par cet ensemble mécanique. En effet, on constate que ces vibrations sont produites à très basse fréquence et se révèlent alors inconfortables pour les occupants de l'aéronef.

De plus, on comprend qu'un constructeur tend à obtenir un dispositif de suspension ayant un impact minimal en termes de masse et de coût.

Par ailleurs, on note que certains aéronefs comprennent un rotor de sustentation pouvant évoluer en vol à diverses vitesses de rotation. Il est alors intéressant d'obtenir un dispositif de suspension adapté à ce type de technologie.

Parmi l'état de la technique, on connaît le document FR 2 363 737 qui présente un dispositif d'isolation de vibrations reliant une masse vibrante à un corps, et qui présente uniquement les caractéristiques du préambule de la revendication 1.

Le dispositif d'isolation comprend un bras de levier chargé d'un poids, des moyens de pivotement reliant ladite masse vibrante audit bras. De plus un dispositif à ressort de torsion est connecté au bras de levier.

Le document FR 2 474 996 présente un dispositif de suspension d'un ensemble mécanique d'un hélicoptère.

Ce dispositif de suspension présente trois barres de maintien obliques et une platine de suspension d'une boîte de transmission de puissance. La platine de suspension comprend une partie centrale solidaire d'un fond de la boîte de transmission de puissance et un bras par barre de maintien oblique. Chaque bras est articulé dans la région de son extrémité proximale d'une part au fuselage et d'autre part à une zone extrémale de la barre de maintien correspondante. L'extrémité distale de chaque bras porte de plus une masse battante.

Le document FR 2 499 505 présente un dispositif de suspension muni d'au moins trois barres de maintien fixées à une boîte de transmission de puissance par leurs extrémités supérieures.

Dès lors, les extrémités inférieures des barres de maintien sont articulées à des bras disposés radialement autour d'une embase de la boîte de transmission de puissance à laquelle ces bras sont reliés. Chaque bras est de plus articulé à un point fort du fuselage de l'aéronef et porte une masse montée au bout d'un support.

De plus, l'embase de la boîte de transmission de puissance est disposée sur une platine de suspension comprenant une membrane déformable en flexion.

Selon le document FR 2 747 098, un dispositif de suspension comporte des masses battantes et des moyens de déplacement de ces masses battantes selon une direction longitudinale d'un support.

Dès lors, le dispositif comporte au moins un capteur susceptible de mesurer les valeurs d'au moins un paramètre représentatif d'un critère de performance du dispositif et un calculateur recevant lesdites valeurs pour asservir la position des masses battantes via leurs moyens de déplacement.

Ce dispositif permet alors de lutter contre des vibrations se produisant à une fréquence variable.

Le document FR 2 795 386 dévoile un dispositif de suspension comprenant une pluralité de barres de maintien obliques.

Chaque barre de maintien oblique est articulée à une structure porteuse par un levier supportant une masse battante. Chaque levier est alors relié à la structure porteuse par un ressort en torsion.

Le document FR 2 787 762 dévoile un dispositif de suspension comprenant une pluralité de barres de maintien obliques.

Chaque barre de maintien oblique est articulée à une structure porteuse par un levier supportant une masse battante. Chaque levier est relié à la structure porteuse par une liaison pivot, et à une boîte de transmission puissance par un ressort en torsion.

On connaît aussi le document WO 03/100284.

La présente invention a alors pour objet de proposer un moyen de suspension antivibratoire d'une barre de maintien d'un dispositif de suspension d'un ensemble mécanique d'aéronef muni d'une boîte de transmission de puissance et d'un rotor de sustentation, ce moyen de suspension demeurant efficace pour différentes configurations et conditions de vol de l'aéronef afin de minimiser les vibrations gênantes notamment perçues par les pilotes et passagers.

Selon l'invention, un moyen de suspension antivibratoire d'une barre de maintien reliant une boîte de transmission de puissance d'un aéronef à une structure porteuse comprend un levier s'étendant d'une extrémité distale supportant au moins une masse battante à une extrémité proximale munie d'une première articulation pour articuler le levier à une structure porteuse portant ledit ensemble mécanique, le moyen de suspension ayant une deuxième articulation pour articuler une barre de maintien au levier.

Ce moyen est notamment remarquable en ce qu'il comporte un moyen de rappel en torsion muni d'un actionneur rotatif ayant une tige de sortie mobile en rotation autour d'un axe de torsion, la tige de sortie étant solidaire du levier pour générer un couple sur ce levier proportionnel à un pivotement angulaire de la tige de sortie induisant une raideur en torsion au niveau de la première articulation, le moyen de suspension ayant un calculateur contrôlant l'actionneur pour adapter la raideur en torsion du levier aux conditions de vol de l'aéronef.

Ainsi, l'invention propose notamment un moyen de suspension actif d'une barre de maintien d'un dispositif de suspension, le moyen de suspension actif mettant en oeuvre un moyen de rappel en torsion actif et non pas un ressort de torsion passif.

En fonction des conditions de vol, le calculateur requiert une rotation de la tige de sortie d'un actionneur pour optimiser la filtration des vibrations induites par l'ensemble mécanique. En permettant le réglage de la raideur de torsion du levier, on obtient un dispositif pouvant filtrer des vibrations se produisant sur une plage de fréquences, et non pas à une unique fréquence donnée. Par exemple, la plage de fréquence couvre une plage s'étendant d'une fréquence nominale prédéterminée moins dix pourcents à cette fréquence nominale prédéterminée plus dix pourcents.

Le caractère anti-résonant de ce moyen de suspension peut donc être adapté aux conditions de vol. Par exemple, le calculateur est à cet effet relié à des dispositifs de mesure d'au moins un paramètre représentatif d'un critère de performances pour asservir la position angulaire de la tige de sortie par rapport à une position nominale.

En effet, certains dispositifs connus ont une raideur en torsion fixe. Le réglage de cette raideur en torsion induit donc un fonctionnement optimal du dispositif afin de filtrer des vibrations produites à une fréquence donnée et donc pour un nombre de configurations de vol limité.

Par contre, l'actionneur selon l'invention crée un couple variable équivalent à une raideur en torsion variable. En modifiant l'état de l'actionneur, on obtient donc une raideur en torsion variable sur requête, la modulation du couple engendré permettant au dispositif de couvrir une plage élargie de fréquences afin que l'aéronef présente un niveau vibratoire optimisé pour un ensemble élargi de configurations de vol.

Plus précisément, l'actionneur crée un couple de rotation qui est transmis au levier, ce levier étant parfois dénommé « lame battante ». En raison du débattement angulaire de ce levier, ce couple se traduit par une raideur en torsion que le calculateur adapte en fonction de la configuration de vol.

Un tel calculateur peut alors comprendre un processeur et une mémoire stockant au moins une loi de contrôle, le processeur exécutant les informations mémorisées pour contrôler l'actionneur en fonction desdites lois de contrôle.

Selon une première variante, il est à noter que l'actionneur peut être un actionneur électrique présentant l'avantage d'être peu encombrant et de minimiser les temps de maintenance.

Selon une deuxième variante, l'actionneur peut être un actionneur hydraulique. Un tel actionneur hydraulique permet de générer des couples importants, mais nécessite l'implémentation d'un circuit hydraulique incluant par exemple un distributeur hydraulique, des pompes, des tuyauteries, des réservoirs.

Pour des raisons sécuritaires, un tel circuit hydraulique peut aussi comprendre des valves de sécurité afin de bloquer l'actionneur dans une position de sécurité prédéterminée en cas de dysfonctionnement du dispositif.

En fonction des caractéristiques de l'aéronef, un constructeur peut donc choisir la réalisation la mieux adaptée à ses besoins.

Ce dispositif peut de plus comporter une ou plusieurs des caractéristiques additionnelles qui suivent.

Par exemple, le moyen de suspension peut comporter un moyen de mesure de la vitesse de rotation du rotor de sustentation, le calculateur étant relié au moyen de mesure pour adapter ladite raideur en torsion en fonction de ladite vitesse de rotation.

Le calculateur contrôle alors un actionneur en prenant en considération les fluctuations de la vitesse de rotation du rotor de sustentation.

Un tel moyen de mesure de la vitesse de rotation du rotor de sustentation peut comprendre des capteurs mesurant la vitesse de rotation du mât de la boîte de transmission de puissance qui est relié au rotor de sustentation par exemple.

De plus, le moyen de suspension peut comporter un système de mesure de niveaux vibratoires pour adapter ladite raideur en torsion en fonction des niveaux vibratoires mesurés. Le système de mesure de niveaux vibratoires peut être muni d'un jeu d'accéléromètres répartis dans l'aéronef.

Le calculateur contrôle alors un actionneur en prenant en considération des niveaux vibratoires perçus dans l'aéronef.

Le calculateur peut donc appliquer un algorithme d'asservissement de l'actionneur mettant en oeuvre au moins une loi de contrôle selon laquelle le couple à générer est fonction de la position angulaire de la tige de sortie et d'un terme d'anticipation, ce terme d'anticipation étant fonction de la vitesse de rotation du rotor de sustentation et 1 ou du niveau vibratoire mesuré selon la réalisation.

Par ailleurs, la première articulation peut comporter une liaison pivot munie d'un premier axe de pivot dirigé selon une première direction, le premier axe de pivot étant inséré dans une ferrure apte à être fixée à la structure porteuse.

Le levier peut alors effectuer une rotation autour de ce premier axe de pivot.

Dès lors, la première articulation comprenant une ferrure apte à être fixée à une structure porteuse coopérant avec un premier axe de pivot, cette ferrure peut comporter au moins une butée pour limiter le débattement du levier.

Ainsi, en cas de dysfonctionnement de l'actionneur, le débattement du levier est restreint par ladite au moins une butée dans un secteur prédéterminé par le constructeur.

Par ailleurs, on note que la tige de sortie est éventuellement dirigée selon la première direction, et donc dans l'alignement du premier axe de pivot.

Selon un autre aspect, la deuxième articulation peut comporter une liaison à rotule munie d'un deuxième axe de liaison dirigé selon une deuxième direction.

La deuxième direction peut alors être parallèle à la tige de sortie.

Outre un moyen de suspension d'une barre de maintien d'une boîte de transmission, l'invention vise un dispositif muni de ce moyen de suspension.

Un tel dispositif de suspension antivibratoire d'un ensemble mécanique muni d'au moins un rotor de sustentation et d'une boîte de transmission de puissance comprend au moins trois barres de maintien articulées chacune par une extrémité supérieure à la boîte de transmission et par une extrémité inférieure à un moyen de suspension, au moins un moyen de suspension comprenant un levier s'étendant d'une extrémité distale supportant au moins une masse battante à une extrémité proximale munie d'une première articulation à une structure porteuse, le moyen de suspension ayant une deuxième articulation pour articuler une barre de maintien par une deuxième articulation au levier entre un centre de gravité de ce levier et ladite extrémité proximale.

Le moyen de suspension est du type décrit précédemment, ce moyen de suspension comportant un moyen de rappel en torsion muni d'un actionneur rotatif ayant une tige de sortie mobile en rotation autour d'un axe de torsion, la tige de sortie étant solidaire du levier pour générer un couple sur ce levier proportionnel à son pivotement angulaire induisant une raideur en torsion au niveau de ladite première articulation, le moyen de suspension ayant un calculateur contrôlant l'actionneur pour adapter une raideur en torsion du levier aux conditions de vol.

Par exemple, le dispositif de suspension comporte au moins trois barres de maintien, chaque barre de maintien comprenant un moyen de suspension selon l'invention.

Dès lors, les calculateurs des moyens de suspension peuvent constituer conjointement un unique calculateur contrôlant tous les actionneurs.

Ainsi, le dispositif peut plus particulièrement comporter au moins trois barres de maintien éventuellement obliques, chaque barre de maintien ayant un moyen de suspension muni d'un actionneur rotatif contrôlé par un calculateur. Favorablement, un seul calculateur contrôle l'ensemble des actionneurs du dispositif.

Outre un dispositif de suspension, l'invention vise un aéronef muni d'une structure porteuse et d'un ensemble mécanique comprenant un rotor de sustentation ainsi qu'une boîte de transmission de puissance entraînant ce rotor de sustentation.

Le dispositif de suspension est alors du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un aéronef selon l'invention,
- la figure 2, un vue schématique d'un moyen de suspension,
- la figure 3, un vue tridimensionnelle d'une réalisation d'un moyen de suspension, et
- la figure 4, un schéma explicitant le fonctionnement de l'invention.

Les éléments présents dans plusieurs figures distinctes sont affectés d'une seule et même référence.

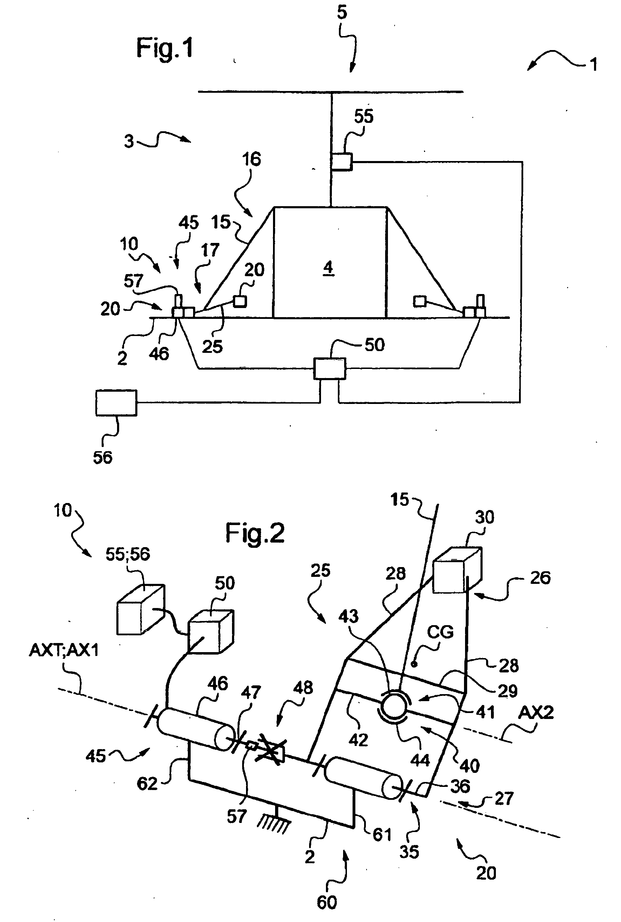

La figure 1 présente un aéronef 1 comportant une structure porteuse 2. De plus, l'aéronef 1 est muni d'un ensemble mécanique 3 fixé à la structure porteuse 2 pour participer notamment à la sustentation de l'aéronef 1.

Cet ensemble mécanique 3 inclut un rotor de sustentation 5, une boîte de transmission de puissance 4 de l'ensemble mécanique 3 étant interposée entre le rotor de sustentation 5 et une installation motrice non représentée sur les figures.

En effet, la représentation de l'aéronef sur les figures est délibérément incomplète pour ne pas alourdir inutilement ces figures.

Cet aéronef 1 comprend un dispositif de suspension pour réduire les vibrations et le bruit généré par l'ensemble mécanique 3.

Ce dispositif de suspension inclut au moins une barre de maintien 15, voire au moins trois barres de maintien 15. Chaque barre de maintien s'étend alors d'une extrémité supérieure 16 vers une extrémité inférieure 17. Dès lors, chaque extrémité supérieure 16 est articulée à la boîte de transmission 4 et notamment à une partie supérieure de cette boîte de transmission de puissance 4, alors que chaque extrémité inférieure 17 est articulée à un moyen de suspension 20 s'interfaçant entre la barre de suspension 15 et la structure porteuse 2.

Chaque moyen de suspension 20 peut comprendre un levier 25 portant une masse battante 30 ainsi que l'extrémité inférieure 17 d'une barre de suspension. De plus le moyen de suspension peut comprendre un moyen de rappel en torsion 45 comprenant un actionneur 46 coopérant avec le levier 25 et un calculateur 50.

Un seul calculateur 50 peut contrôler tous les actionneurs du dispositif de suspension 10.

Par ailleurs, le calculateur 50 peut être relié à des dispositifs de mesure d'au moins un paramètre représentatif d'un critère de performances.

De tels dispositifs de mesure peuvent comprendre :
- un moyen de mesure 55 de la vitesse de rotation d'un rotor de sustentation 5 de l'aéronef,
- un système de mesure 56 des niveaux vibratoires de l'aéronef, pourvu par exemple de jeu d'accéléromètres placés dans une cabine ou un cockpit de l'aéronef,
- un moyen de détermination 57 de l'état de chaque actionneur, par exemple un moyen de détermination du pivotement angulaire d'une tige de sortie de l'actionneur par rapport à une position nominale.

On note que le dispositif de suspension peut aussi inclure un système de suspension complémentaire, agencé entre le fond de la boîte de transmission de puissance 4 et la structure porteuse par exemple.

La figure 2 détaille un moyen de suspension 20 selon l'invention.

Ce moyen de suspension 20 comprend un levier 25. Le levier 25 peut comprendre deux bras longitudinaux 28 liés par un bras transversal 29 de manière à présenter une forme en H. Le levier 25 s'étend alors longitudinalement d'une extrémité dite « extrémité proximale 27 » vers une extrémité dite « extrémité distale 26 ».

Ce levier 25 porte alors au moins une masse battante 30, cette masse battante étant agencée à l'extrémité distale 26 du levier 25.

De plus, l'extrémité proximale 27 est munie d'une première articulation 35 permettant de relier le levier 25 à la structure porteuse 2.

Cette première articulation 35 comporte éventuellement une liaison pivot permettant la rotation du levier, et de fait de la masse battante 30 autour d'une première direction AX1.

Par suite, la première articulation peut comprendre une ferrure 60 pouvant être fixée à la structure porteuse 2. Un premier axe de pivot 36 de la première articulation peut alors traverser au moins une joue 61 de cette ferrure 60.

En outre, le moyen de suspension comprend une deuxième articulation 40 pour articuler une barre de maintien 15 au levier 25 à proximité de la première articulation. Par exemple, la deuxième articulation 40 est agencée dans une zone comprise entre d'une part le centre de gravité Cg de l'ensemble comprenant le levier et la masse battante et d'autre part l'extrémité proximale 27.

Cette deuxième articulation peut inclure au minimum une liaison pivot. La deuxième articulation peut avantageusement être une liaison à rotule munie d'un deuxième axe de liaison 42 traversant une partie interne sphérique 43 d'une rotule, cette rotule interne sphérique étant disposée dans une cage 44 de la partie inférieure 17 d'une barre de maintien 15.

Le deuxième axe de liaison 42 est dirigé selon une deuxième direction AX2 parallèle à la première direction AX1.

Par ailleurs, le moyen de suspension 20 comprend un moyen de rappel 45 en torsion.

Ce moyen de rappel comprend un actionneur 46 rotatif muni d'un corps et d'une tige de sortie 47. Le corps peut être fixé à une joue 62 de la ferrure 60.

De plus, la tige de sortie 47 est solidarisée au levier 25, par le biais d'une liaison complète 48 par exemple.

L'actionneur est alors contrôlé par un calculateur 50.

En effet, le calculateur 50 peut requérir la rotation de la tige de sortie 47 autour d'un axe de torsion AXT afin de l'écarter d'une position nominale par exemple. Un moyen de détermination 57 de l'état de l'actionneur peut fournir au calculateur la position angulaire α de la tige de sortie, par rapport à ladite position nominale le cas échéant.

Il est à noter que la tige de sortie 47 est dirigée selon la première direction AX1.

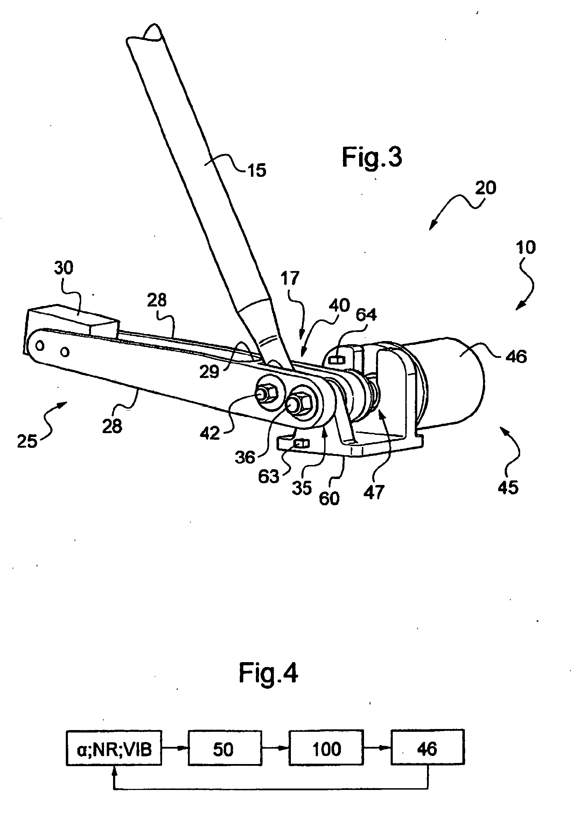

La figure 3 présente une vue tridimensionnelle du moyen de suspension 20.

Cette figure 3 montre notamment des butées 63, 64 aptes à limiter le débattement angulaire du levier 25 pour augmenter la sécurité du moyen de suspension.

Le moyen de suspension obtenu est alors relativement simple en présentant un encombrement et une masse limités.

La figure 4 explicite le fonctionnement du moyen de suspension pour permettre la réduction des vibrations créées ou émises par un ensemble mécanique 3.

En fonction d'informations relatives à des paramètres prédéterminés, le calculateur 50 ordonne une rotation de la tige de sortie 47 de l'actionneur 46.

La tige de sortie 47 génère alors un couple sur le levier 25 proportionnel au pivotement angulaire effectué par cette tige de sortie autour de l'axe de torsion. Ce couple équivaut à une raideur en torsion du moyen de suspension au niveau de la première articulation à la structure porteuse.

Dès lors, le calculateur a ajusté la raideur en torsion du moyen de suspension par le biais de la tige de sortie, afin que le moyen de suspension filtre les vibrations émises à une certaine fréquence.

En fonction des conditions de vol, l'ensemble mécanique peut émettre des vibrations à une nouvelle fréquence distincte de ladite certaine fréquence.

Au travers des paramètres lui parvenant, le calculateur détecte ce changement de conditions de vol. Ce calculateur 50 contrôle alors l'actionneur 46 pour adapter la raideur de torsion du moyen de suspension afin que le moyen de suspension filtre les vibrations produites à la nouvelle fréquence.

La loi d'influence de la raideur en torsion sur le comportement antirésonant du moyen de suspension est linéaire. Par suite, le calculateur peut comprendre au moins une loi de contrôle simple pour déterminer l'ordre à transmettre à l'actionneur.

A cet effet, les paramètres transmis au calculateur et utilisés par ce calculateur au travers de lois de contrôle peuvent inclure la position angulaire a de la tige de sortie, au moins un niveau vibratoire VIB mesuré par exemple en cabine, voire la vitesse de rotation NR du rotor de sustentation.

Par ailleurs, l'actionneur peut être un actionneur électrique.

Le calculateur peut alors contrôler directement cet actionneur électrique au travers de méthodes connues.

Selon une autre variante, l'actionneur est un actionneur rotatif hydraulique.

Le calculateur communique alors avec un circuit hydraulique 100 en relation avec l'actionneur 46.

Ce circuit hydraulique peut être un circuit dédié à cette application, ou peut être une part d'un circuit hydraulique existant de l'aéronef.

De plus, le circuit hydraulique peut comporter des valves de sécurité utilisées en cas de défaillances d'un élément du circuit hydraulique. De telles valves de sécurité peuvent permettre de positionner l'actionneur dans une position de sécurité prédéterminée.

Indépendamment de la variante, on comprend que l'actionneur présente un temps de réaction suffisant pour que le moyen de suspension s'adapte aux changements de configuration de vol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Moyen de suspension (20) antivibratoire d'une barre de maintien (15) apte à relier une boîte de transmission de puissance (4) d'un aéronef (1) à une structure porteuse (2), ce moyen de suspension comprenant un levier (25) s'étendant d'une extrémité distale (26) supportant au moins une masse battante (30) à une extrémité proximale (27) munie d'une première articulation (35) pour articuler le levier à une structure porteuse (2), le moyen de suspension ayant une deuxième articulation pour articuler la barre de maintien (15) au levier (25), le moyen de suspension comportant un moyen de rappel (45) en torsion,
**caractérisé en ce que** le moyen de rappel (45) en torsion est muni d'un actionneur (46) rotatif ayant une tige de sortie (47) mobile en rotation autour d'un axe de torsion (AXT), ladite tige de sortie (47) étant solidaire dudit levier (25) pour générer un couple sur ce levier (25) proportionnel à son pivotement angulaire induisant une raideur en torsion au niveau de ladite première articulation (35), ledit moyen de suspension ayant un calculateur (50) contrôlant ledit actionneur (46) pour adapter ladite raideur en torsion du levier (25) aux conditions de vol dudit aéronef.

2. Moyen de suspension selon la revendication 1,
**caractérisé en ce qu'il** comporte un moyen de mesure d'une vitesse (55) de rotation d'un rotor de sustentation (5) dudit aéronef, ledit calculateur (50) étant relié au moyen de mesure (55) pour adapter ladite raideur en torsion en fonction de ladite vitesse de rotation.

3. Moyen de suspension selon l'une quelconque des revendications 1 à 2,
**caractérisé en ce qu'il** comporte un système de mesure (56) de niveaux vibratoires dudit aéronef pour adapter ladite raideur en torsion en fonction des niveaux vibratoires mesurés.

4. Moyen de suspension selon l'une quelconque des revendications 1 à 3,
**caractérisé en ce que** ladite première articulation (35) comporte une liaison pivot munie d'un premier axe de pivot (36) dirigé selon une première direction (AX1), ledit premier axe de pivot (36) étant inséré dans une ferrure (60) apte à être fixée à une structure porteuse (2) de ladite boîte de transmission.

5. Moyen de suspension selon la revendication 4,
**caractérisé en ce que** ladite tige de sortie (47) est dirigée selon ladite première direction (AX1).

6. Moyen de suspension selon l'une quelconque des revendications 4 à 5,
**caractérisé en ce que** ladite première articulation (35) comprenant ladite ferrure (60) coopérant avec ledit premier axe de pivot (36), ladite ferrure (60) comporte au moins une butée (63, 64) pour limiter le débattement du levier.

7. Moyen de suspension selon l'une quelconque des revendications 1 à 6,
**caractérisé en ce que** ladite deuxième articulation (40) comporte une liaison à rotule (41) munie d'un deuxième axe de liaison (42) dirigé selon une deuxième direction (AX2).

8. Moyen de suspension selon la revendication 7, **caractérisé en ce que** ladite deuxième direction (AX2) est parallèle à ladite tige de sortie (47).

9. Dispositif de suspension (10) antivibratoire d'un ensemble mécanique (3) muni d'au moins un rotor de sustentation (5) et d'une boîte de transmission de puissance (4), le dispositif de suspension (10) comprenant au moins trois barres de maintien (15) articulées par une extrémité supérieure (16) à la boîte de transmission (4) et par une extrémité inférieure (17) à un moyen de suspension (20), au moins un moyen de suspension (20) comprenant un levier (25) s'étendant d'une extrémité distale (26) supportant au moins une masse battante (30) à une extrémité proximale (27) munie d'une première articulation (35) pour articuler le levier à une structure porteuse (2), le moyen de suspension ayant une deuxième articulation pour articuler une barre de maintien (15) par une deuxième articulation (40) au levier (25) entre un centre de gravité (Cg) de ce levier (25) et ladite extrémité proximale (27),
**caractérisé en ce que** ledit moyen de suspension est selon l'une quelconque des revendications 1 à 8.

10. Dispositif de suspension selon la revendication 9,
**caractérisé en ce qu'**il comporte au moins trois barres de maintien, chaque barre de maintien comprenant un moyen de suspension selon l'une quelconque des revendications 1 à 9.

11. Dispositif de suspension selon la revendication 10,
**caractérisé en ce que** les calculateurs des moyens de suspension constituent conjointement un unique calculateur contrôlant tous les actionneurs.

12. Aéronef (1) muni d'une structure porteuse (2) et d'un ensemble mécanique (3) comprenant un rotor de sustentation (5) et une boîte de transmission de puissance (4) entraînant ce rotor de sustentation (5),
**caractérisé en ce qu'il** comporte un dispositif de suspension (10) selon l'une quelconque des revendications 9 à 11.

## Patentansprüche

1. Schwingungsdämpfendes Aufhängungsmittel (20) für eine Haltestange (15), die ein Leistungsgetriebe (4) eines Luftfahrzeugs (1) mit einem Trägeraufbau (2) verbinden kann, wobei das Aufhängungsmittel einen Hebel (25) aufweist, der sich von einem distalen Ende (26), welches wenigstens eine Schwungmasse (30) trägt, bis zu einem proximalen Ende (27) erstreckt, welches mit einem ersten Gelenk (35) versehen ist, um den Hebel an einem Trägeraufbau (2) anzulenken, wobei das Aufhängungsmittel ein zweites Gelenk aufweist, um die Haltestange (15) an dem Hebel (25) anzulenken, wobei das Aufhängungsmittel ein Torsionsrückstellmittel (45) aufweist,
**dadurch gekennzeichnet, dass** das Torsionsrückstellmittel (45) mit einem Drehstellorgan (46) versehen ist, welches eine um eine Torsionsachse (AXT) drehbare Ausgangsstange (47) aufweist, wobei die Ausgangsstange (47) fest mit dem Hebel (25) verbunden ist, um mit diesem Hebel (25) ein Drehmoment zu erzeugen, welches proportional zu seiner Winkelverschwenkung ist und eine Torsionssteifigkeit auf der Höhe des ersten Gelenks (35) erzeugt, wobei das Aufhängungsmittel einen Rechner (50) aufweist, der das Stellorgan (46) steuert, um die Torsionssteifigkeit des Hebels (25) an die Flugbedingungen des Luftfahrzeugs anzupassen.

2. Aufhängungsmittel nach Anspruch 1,
**dadurch gekennzeichnet, dass** es ein Mittel (55) zur Messung der Drehgeschwindigkeit eines Auftriebsrotors (5) des Luftfahrzeugs aufweist, wobei der Rechner (50) mit dem Mittel (55) zur Messung verbunden ist, um die Torsionssteifigkeit in Abhängigkeit von der Drehgeschwindigkeit anzupassen.

3. Aufhängungsmittel nach einem der Ansprüche 1 bis 2,
**dadurch gekennzeichnet, dass** es ein System (56) zur Messung von Schwingungspegeln des Luftfahrzeugs aufweist, um die Torsionssteifigkeit in Abhängigkeit von diesen gemessenen Schwingungspegeln anzupassen.

4. Aufhängungsmittel nach einem der Ansprüche 1 bis 3,
**dadurch gekennzeichnet, dass** das erste Gelenk (35) eine Schwenkverbindung aufweist, die mit einer ersten Schwenkachse (36) versehen ist, die in einer ersten Richtung (AX1) ausgerichtet ist, wobei die erste Schwenkachse (36) in einen ersten Beschlag (60) eingefügt ist, der an einem Trägeraufbau (2) des Getriebes befestigt werden kann.

5. Aufhängungsmittel nach Anspruch 4,
**dadurch gekennzeichnet, dass** die Ausgangsstange (47) in die erste Richtung (AX1) ausgerichtet ist.

6. Aufhängungsmittel nach einem der Ansprüche 4 bis 5,
**dadurch gekennzeichnet, dass** das erste Gelenk (35) den Beschlag (60) aufweist, der mit der ersten Schwenkachse (36) zusammenwirkt, wobei der Beschlag (60) mindestens einen Anschlag (63, 64) aufweist, um den Ausschlag des Hebels zu begrenzen.

7. Aufhängungsmittel nach einem der Ansprüche 1 bis 6,
**dadurch gekennzeichnet, dass** das zweite Gelenk (40) ein Kugelgelenk (41) aufweist, welches mit einer zweiten Verbindungsachse (42) versehen ist, die in eine zweite Richtung (AX2) ausgerichtet ist.

8. Aufhängungsmittel nach Anspruch 7,
**dadurch gekennzeichnet, dass** die zweite Richtung (AX2) parallel zur Ausgangsstange (47) verläuft.

9. Schwingungsdämpfende Aufhängungsvorrichtung (10) einer mechanischen Anordnung (3) mit mindestens einem Auftriebsrotor (5) und einem Leistungsgetriebe (4), wobei die Aufhängungsvorrichtung (10) mindestens drei Haltestangen (15) aufweist, die mit einem oberen Ende (16) an dem Getriebe (4) angelenkt sind und mit einem unteren Ende (17) an einem Aufhängungsmittel (20), wobei mindestens ein Aufhängungsmittel (20) einen Hebel (25) aufweist, der sich von einem distalen Ende (26), das mindestens eine Schwungmasse (30) trägt, bis zu einem proximalen Ende (27) erstreckt, welches mit einem ersten Gelenk (35) versehen ist, um den Hebel an einem Trägeraufbau (2) anzulenken, wobei das Aufhängungsmittel ein zweites Gelenk aufweist, um eine Haltestange (15) über ein zweites Gelenk (40) zwischen einem Schwerpunkt (Cg) dieses Hebels (25) und dem proximalen Ende (27) am Hebel (25) anzulenken,
**dadurch gekennzeichnet, dass** das Aufhängungsmittel gemäß einem der Ansprüche 1 bis 8 ausgestaltet ist.

10. Aufhängungsvorrichtung nach Anspruch 9,
**dadurch gekennzeichnet, dass** sie mindestens drei Haltestangen aufweist, wobei jede Haltestange ein Aufhängungsmittel nach einem der Ansprüche 1 bis 9 aufweist.

11. Aufhängungsvorrichtung nach Anspruch 10,
**dadurch gekennzeichnet, dass** die Rechner der Aufhängungsmittel zusammen einen einzigen Rechner bilden, der alle Stellorgane steuert.

12. Luftfahrzeug (1) mit einem Trägeraufbau (2) und einer mechanischen Anordnung (3), die einen Auftriebsrotor (5) und ein Getriebe (4) aufweist, das den Auftriebsrotor (5) antreibt,
**dadurch gekennzeichnet, dass** es eine Aufhängungsvorrichtung (10) nach einem der Ansprüche 9 bis 11 aufweist.

## Claims

1. Anti-vibration suspension means (20) for a holding bar (15) suitable for connecting a power transmission gearbox (4) of an aircraft (1) to a carrier structure (2), the suspension means comprising a lever (25) extending from a distal end (26) supporting at least one oscillating weight (30) to a proximal end (27) provided with a first articulation (35) for articulating the lever to a carrier structure (2), the suspension means having a second articulation for articulating the holding bar (15) to the lever (25), the suspension means comprising a torsion return means (45),
**characterised in that** the torsion return means (45) is provided with a rotary actuator (46) having an output shaft (47) movable in rotation about a torsion axis (AXT), said output shaft (47) being secured to said lever (25) to generate torque on the lever (25) proportional to its angular pivoting inducing torsion stiffness at said first articulation (35), said suspension means having a computer (50) controlling said actuator (46) to adapt said torsion stiffness of the lever (25) to the flight conditions of said aircraft.

2. Suspension means according to Claim 1,
**characterised in that** it comprises a measurement means for measuring a speed (55) of rotation of a lift rotor (5) of said aircraft, said computer (50) being connected to the measurement means (55) in order to adapt said torsion stiffness as a function of said speed of rotation.

3. Suspension means according to any one of Claims 1 to 2, **characterised in that** it comprises a measurement system (56) for measuring vibration levels of said aircraft in order to adapt said torsion stiffness as a function of the measured vibration levels.

4. Suspension means according to any one of Claims 1 to 3,
**characterised in that** said first articulation (35) comprises a pivot connection provided with a first pivot shaft (36) directed along a first direction (AX1), said first pivot shaft (36) being inserted in a fitting (60) suitable for being fastened to a carrier structure (2) carrying said gearbox.

5. Suspension means according to Claim 4,
**characterised in that** said output shaft (47) is directed along said first direction (AX1).

6. Suspension means according to any one of Claims 4 to 5,
**characterised in that**, with said first articulation (35) comprising said fitting (60) co-operating with said first pivot shaft (36), said fitting (60) comprises at least one stop (63, 64) for limiting the displacement of the lever.

7. Suspension means according to any one of Claims 1 to 6,
**characterised in that** said second articulation (40) comprises a ball joint (41) provided with a second connection shaft (42) directed along a second direction (AX2).

8. Suspension means according to Claim 7,
**characterised in that** said second direction (AX2) is parallel to said output shaft (47).

9. Anti-vibration suspension device (10) for a mechanical assembly (3) provided with at least one lift rotor (5) and a power transmission gearbox (4), the suspension device (10) comprising at least three holding bars (15) articulated by a top end (16) to the gearbox (4) and by a bottom end (17) to a suspension means (20), at least one suspension means (20) comprising a lever (25) extending from a distal end (26) supporting at least one oscillating weight (30) to a proximal end (27) provided with a first articulation (35) for articulating the lever to a carrier structure (2), the suspension means having a second articulation for articulating a holding bar (15) by a second articulation (40) to the lever (25) between a centre of gravity (Cg) of the lever (25) and said proximal end (27),
**characterised in that** said suspension means is according to any one of Claims 1 to 8.

10. Suspension device according to Claim 9,
**characterised in that** it comprises at least three holding bars, each holding bar comprising a suspension means according to any one of Claims 1 to 9.

11. Suspension device according to Claim 10,
**characterised in that** the computers of the suspension means constitute together a single computer controlling all the actuators.

12. Aircraft (1) provided with a carrier structure (2) and a mechanical assembly (3) comprising a lift rotor (5) and a power transmission gearbox (4) driving the lift rotor (5),
**characterised in that** the aircraft comprises a suspension device (10) according to any one of Claims 9 to 11.
